# EUROPÄISCHE PATENTANMELDUNG

(11) **EP 2 383 450 A1**
(43) Veröffentlichungstag der Anmeldung: **02.11.2011**
(21) Anmeldenummer: 11003271.1
(22) Anmeldetag: 19.04.2011
(51) Int. Cl.: F02B 47/06, F02B 43/00, F02M 25/10

(54) **Verfahren zum Betreiben eines Verbrennungsmotors und Verbrennungsmotor**

(30) Priorität: 29.04.2010 DE 102010018703
(71) Anmelder: Messer Group GmbH, 65812 Bad Soden am Taunus (DE)
(72) Erfinder: Grohmann, Paul, 2372 Giesshübl (AT)
(74) Vertreter: Münzel, Joachim R.

(57) **Zusammenfassung**

Ein Verfahren zum Betreiben eines Verbrennungsmotors, bei dem in einem Arbeitsraum des Verbrennungsmotors ein aus wenigstens zwei Gaskomponenten bestehendes verdichtetes Arbeitsgas gebildet, das Arbeitsgas anschließend gezündet und verbrannt wird und die bei der Verbrennung des Arbeitsgases frei werdende Energie arbeitsleistend zur Bewegung eines Kolbens eingesetzt wird, ist dadurch gekennzeichnet, dass als eine erste Gaskomponente des Arbeitsgases gasförmiger Sauerstoff und als eine zweite Gaskomponente ein niederkalorischer Brennstoff zum Einsatz kommt. Bevorzugt kommt dabei rezykliertes Brenngas als Moderationsgas zum Einsatz. Die Erfindung ermöglicht insbesondere eine wirtschaftliche Verbrennung niederkalorischer Brennstoffe.

## Beschreibung

Die Erfindung betrifft ein Verfahren zum Betreiben eines Verbrennungsmotors, bei dem in einem Arbeitsraum des Verbrennungsmotors ein aus wenigstens zwei Gaskomponenten bestehendes verdichtetes Arbeitsgas gebildet, das Arbeitsgas anschließend gezündet und verbrannt wird und die bei der Verbrennung des Arbeitsgases frei werdende Energie arbeitsleistend zur Bewegung eines Kolbens eingesetzt wird. Die Erfindung betrifft des Weiteren einen entsprechenden Verbrennungsmotor.

Derartige Verfahren bzw. Motoren sind, beispielsweise als Otto-, Diesel- oder Wankelmotoren, seit langer Zeit bekannt und im Einsatz. Beispielsweise wird in Hubkolbenmotoren, die mit dem Diesel-Verbrennungsverfahren arbeiten, zunächst Luft in den Zylinder des Hubkolbenmotors eingesaugt und anschließend verdichtet, wodurch sich die Luft auf 700°C bis 900°C erwärmt. Im Bereich des oberen Totpunkts des Kolbens wird ein Kraftstoff in die im Zylinder vorliegende verdichtete Luft eingespritzt. Die hohe Temperatur der Luft ist ausreichend, um den meist flüssigen Kraftstoff von der Oberfläche her zu verdampfen und das Kraftstoff-LuftGemisch zu zünden. Bei der Verbrennung des Kraftstoff-Luft-Gemisches wird die innere Energie des Kraftstoffes in Form von Wärme freigesetzt. Das Verbrennungsgasgemisch dehnt sich unter arbeitsleistender Bewegung des Kolbens aus, bis dieser den unteren Totpunkt erreicht hat, wobei sich das Verbrennungsgas abkühlt. Anschließend werden die Verbrennungsgase ausgestoßen. Diese Motoren versagen jedoch bei Brennstoffen, die einen so geringen Brennwert aufweisen, dass eine spontane oder auch fremdgezündete Verbrennung mit Luft selbst bei den genannten hohen Temperaturen nicht möglich ist.

Als "niederkalorische Brennstoffe" werden im Folgenden Brennstoffe verstanden, die entweder von Haus aus nur einen geringen Brennwert aufweisen oder als Stoffgemisch einen hohen Anteil nicht brennbarer Bestandteile aufweisen. Insbesondere werden unter "niederkalorischen Brennstoffen" Gasgemische verstanden, die einen hohen Anteil an Inertgasen von 20 Vol.-% bis 55 Vol.-% enthalten, wie beispielsweise Biogas oder Deponiegas mit einem Brennwert von 4 bis 7 kWh/m³ und darunter. Weitere Beispiele für derartige Brennstoffe sind stark mit unbrennbaren Bestandteilen angereicherte Brennstoffe, wie etwa mit Inertgasen vermischtes Erdgas oder mit unbrennbaren Bestandteilen verschmutztes Öl. Um ein zündfähiges und für Verbrennungsmotoren geeignetes Gemisch mit dieser Art Brennstoff herzustellen, muss bislang der Brennstoff aufwändig aufgearbeitet und dabei der Anteil der nicht brennbaren Bestandteile reduziert werden. Beispielsweise wird im Falle von Biogas oder Deponiegas, das neben brennbaren Bestandteilen einen erheblichen Anteil von Kohlendioxid von bis zu 55 Vol-% enthält, das Kohlendioxid zumindest weitgehend abgetrennt, um eine methanreiche und damit als Brennstoff in üblichen Verbrennungsprozessen geeignete Fraktion zu erhalten. Das abgetrennte Kohlendioxid ist jedoch zugleich mit einer Vielzahl zusätzlicher Stoffe beladen, die eine weitere Verwertung des Kohlendioxids unwirtschaftlich machen; aus diesem Grunde wird das abgetrennte Kohlendioxid in der Regel zum Nachteil der Umwelt in die Umgebungsatmosphäre abgegeben.

Aufgabe der vorliegenden Erfindung ist es daher, ein Verfahren zum Betreiben eines Verbrennungsmotors sowie einen entsprechenden Verbrennungsmotor anzugeben, das bzw. der auch für die Verbrennung niederkalorischer Brennstoffe geeignet ist.

Gelöst ist diese Aufgabe durch ein Verfahren mit den Merkmalen des Patentanspruchs 1.

Die Erfindung ermöglicht also die wirtschaftliche Verbrennung niederkalorischer Brennstoffe in einem Verbrennungsmotor dadurch, dass der niederkalorische Brennstoff im Arbeitsraum des Verbrennungsmotors mit Sauerstoff verbrannt wird. Als Sauerstoff wird hier Sauerstoff mit einer Reinheit von 90 Vol.-%, bevorzugt mehr als 99 Vol.-% verstanden. Verbrennungsprozesse mit Sauerstoff haben bislang, unter anderem wegen der hohen dabei auftretenden Temperaturen, bislang nur in metallurgischen Verfahren Eingang gefunden, nicht jedoch bei üblichen Verbrennungsmotoren, also Motoren, bei denen eine Verbrennung eines Gemisches aus Kraftstoff und Oxidationsmittel innerhalb eines geschlossenen Arbeitsraumes erfolgt, wie etwa Hubkolbenmotoren oder Rotationskolbenmotoren. Insbesondere bei Brennstoffen wie Biogas oder Deponiegas, die im Wesentlichen aus Kohlenwasserstoffen und Kohlendioxid bestehen, führt das erfindungsgemäße Verfahren zu einem Abgas, das aus Kohlendioxid hoher Reinheit besteht und mit einem geringen Aufwand in anderen industriellen Prozessen genutzt oder einer CO₂-Sequestrierung zugeführt werden kann.

Der Verbrennungsmotor kann dabei beispielsweise nach dem Dieselprinzip oder nach dem Ottoprinzip arbeiten. Im ersteren Fall wird der Sauerstoff oder der niederkalorische Brennstoff in den Arbeitsraum des Verbrennungsmotors eingesaugt und beispielsweise durch die Bewegung des Kolbens verdichtet. In den verdichteten Sauerstoff bzw. den verdichteten niederkalorischen Brennstoff wird entsprechend Sauerstoff oder niederkalorischer Brennstoff unter Bildung eines zündfähigen Arbeitsgases eingedüst, das durch Fremd- oder Selbstzündung gezündet wird. Im Falle eines nach dem Ottoprinzip arbeitenden Verbrennungsmotors wird ein Gemisch aus Sauerstoff und niederkalorischem Brennstoff im Arbeitsraum des Verbrennungsmotors verdichtet und anschließend mittels Fremdzündung gezündet. Die bei der Verbrennung des Arbeitsgases frei werdende innere Energie des Brennstoffs wird in an sich bekannter Weise arbeitsleistend zum Antrieb des Kolbens eingesetzt. In letzten Schritt werden die Verbrennungsgase ausgestoßen. Das erfindungsgemäße Verfahren kann auch durch verschiedene, aus der Entwicklung von Verbrennungsmotoren verschiedenster Art bekannte Ergänzungen in seiner Effizienz verbessert werden, wie beispielsweise dem "Common-Rail" -Verfahren bei dem - übertragen auf die Erfindung - Sauerstoff oder Brennstoff beständig unter hohem Druck bereitgehalten wird und somit eine Abfolge von mehreren genau dosierten Eindüsungen des Sauerstoffs bzw. Brennstoffs erlaubt. Das erfindungsgemäße Verfahren ist sowohl für Hubkolbenmotoren als auch für Rotationskolbenmotoren, wie etwa Wankelmotoren, geeignet. Sofern ein flüssiger Brennstoff zum Einsatz kommt, empfiehlt sich die Zuführung des Brennstoffes an einer Zerstäuberdüse unter Bildung eines Aerosols, um eine möglichst innige Durchmischung mit dem Sauerstoff beim Eindüsen in den verdichteten Sauerstoff (bei Motoren, die nach dem Diesel-Prinzip arbeiten) oder bei der Gemischbildung (bei Motoren, die nach dem Otto-Prinzip arbeiten) zu erreichen.

Kommt ein Brennstoff mit höherem Brennwert zum Einsatz, beispielsweise reines oder nur wenig verschmutztes Erdgas oder übliche, als Kraftstoffe eingesetzte Kohlenwasserstoffe, wird in einer abermals vorteilhaften Ausgestaltung der Erfindung der Brennstoff vor seiner Zuführung des Brennstoffs an den Arbeitsraum mit einem Moderationsgas vermischt, um die Temperaturen im Arbeitsraum nicht zu sehr ansteigen zu lassen. Als Moderationsgas kommt beispielsweise ein Inertgas in Betracht, oder Verbrennungsgase, die nach dem Ausstoß teilweise wieder zusammen mit dem Brennstoff in den Arbeitsraum zurückgeführt werden. Als besonders bevorzugtes Moderationsgas dient Kohlendioxid, das entweder als reines Gas zugeführt oder aus dem Abgas des Verbrennungsmotors zurückgeführt wird. In einer besonders zweckmäßigen Weiterbildung der Erfindung wird der Mengenstrom des Moderationsgases in Abhängigkeit vom Brennwert des zugeführten Brennstoffs oder von anderen physikalischen oder chemischen Parametern, wie beispielsweise der Zusammensetzung des Abgases, geregelt.

Die Aufgabe der Erfindung wird auch durch einen Verbrennungsmotor gelöst, der mit einem in einer Arbeitskammer beweglich aufgenommenen Kolben ausgerüstet ist, wobei die Arbeitskammer mit einer Brennstoffzuleitung, eine mit einer Sauerstoffquelle, beispielsweise einem Flüssig-Sauerstofftank, strömungsverbundenen Sauerstoffzuleitung und mit einer Abgasleitung strömungsverbunden ist, und bei dem eine Rückleitung zur teilweisen Rezyklierung des Abgases eine Strömungsverbindung zwischen der Abgasleitung und der Brennstoffzuleitung und/oder der Sauerstoffzuleitung herstellt. Der bewegliche Kolben grenzt in der Arbeitskammer ein hier als Arbeitsraum bezeichnetes Volumen ab, in dem die für das Verfahren wesentlichen thermodynamischen Prozesse stattfinden. Beispielsweise bezeichnet beim Hubkolbenmotor der Arbeitsraum den vom Kolben begrenzten Bereich des Zylinders und beim Rotationskolbenmotor das jeweils durch eine Wand des Läufers und der Innenwand des Gehäuses begrenzte Volumen.

Vorteilhafterweise handelt es sich bei dem erfindungsgemäßen Verbrennungsmotor und einen stationären Motor oder um einen Schiffsmotor, da in diesen Fällen die Versorgung mit Sauerstoff, der in einem Tank in flüssiger Form gelagert und über eine Verdampferstufe dem Verbrennungsmotor in Gasform zugeführt wird, unschwer zu bewerkstelligen ist.

Anhand der Zeichnungen soll ein Ausführungsbeispiel der Erfindung näher erläutert werden. In schematischer Ansicht zeigen:
- Fig. 1-4:: Die Abfolge des erfindungsgemäßen Verfahrens in einem Viertaktprozess am Beispiel eines Hubkolbenmotors und
- Fig. 5:: Den Hubkolbenmotor aus dem Fig. 1-4 in einer erfindungsgemäßen Vorrichtung mit teilweiser Rezyklierung von Verbrennungsgasen

Der in den Zeichnungen gezeigte, beispielhaft als Hubkolbenmotor 1 ausgebildete Motor umfasst, ähnlich einem Dieselmotor, einen Zylinder 2, in welchem ein Kolben 3 axial beweglich aufgenommen ist. Der Kolben 3 ist in an sich bekannter Weise mit einer hier nicht gezeigten Kurbelwelle wirkverbunden. Der Kolben 3 grenzt auf seiner von der Kurbelwelle abgewandten Seite innerhalb des Zylinders 2 einen Arbeitsraum 4 ab. In den Arbeitsraum 4 mündet auf seiner dem Kolben gegenüberliegenden Seite eine mit einem Einlassventil 6 ausgerüstete Brennstoffzuleitung 5, eine mit einem Auslassventil 8 ausgerüstete Abgasleitung 7 sowie eine Hochdruckdüse 9 für gasförmigen Sauerstoff.

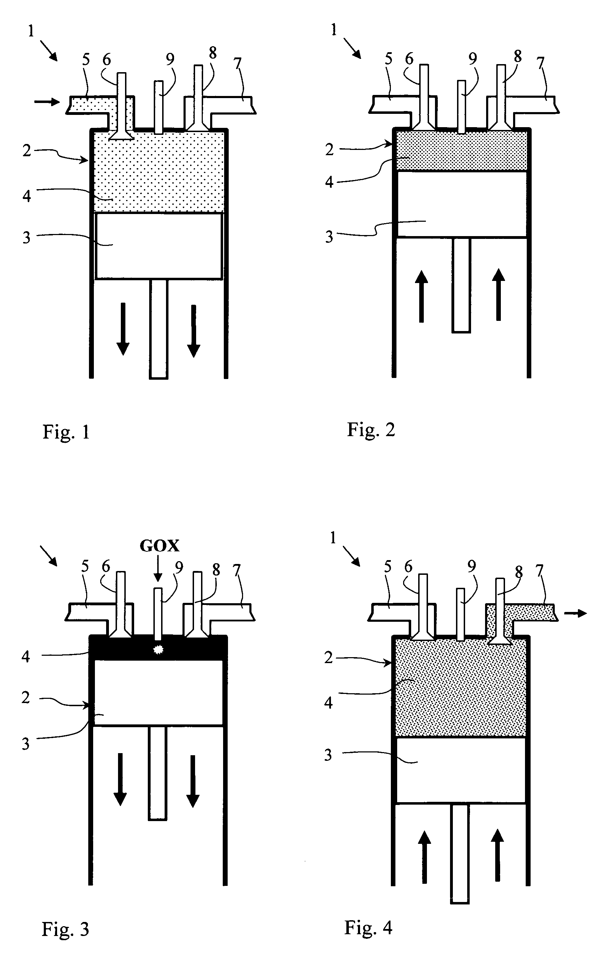

Am Beginn des in Fig. 1 dargestellten ersten Taktes steht der Kolben an seinem oberen Totpunkt. Das Auslassventil 8 wird geschlossen und das Einlassventil 6 geöffnet. Der Kolben 3 bewegt sich nunmehr in Pfeilrichtung in Richtung Kurbelwelle. Aufgrund dieser Bewegung des Kolbens 3 wird ein Brennstoff, beispielsweise Biogas, durch die Eingangsleitung 5 in den Arbeitsraum 4 gesaugt. Bei Erreichen des unteren Totpunkts ist der erste Takt beendet und das Einlassventil 6 wird geschlossen. Der Brennstoff liegt unter dem in der Eingangsleitung 5 herrschenden Druck vor, bei dem es sich um Umgebungsdruck oder um einen Überdruck gegenüber dem Umgebungsdruck von beispielsweise 5 bis 10 bar handeln kann.

Im zweiten Takt (Fig. 2) bewegt sich der Kolben - bei geschlossenem Einlassventil 6 und ebenfalls geschlossenem Auslassventil 8 - zurück zu seinem oberen Totpunkt. Der im Arbeitsraum 4 vorliegende Brennstoff wird dadurch stark, um beispielsweise das 10-30 fache, verdichtet und dabei auf eine Temperatur von ca. 600°C bis 900°C erhitzt. Bei Erreichen des oberen Totpunktes wird gasförmiger Sauerstoff (GOX) mit einer Reinheit von beispielsweise 95 Vol.-% mit einem hohen Druck von 150 bar bis 2500 bar (bevorzugt etwa 200 bis 300 bar) über die Hochdüse 9 eingedüst. Auch mehrere aufeinanderfolgende Eindüsungen (Vor-, Haupt- und und/oder Nacheindüsung) zeitlich vor, bei oder nach Erreichen des oberen Totpunktes sind im Rahmen der Erfindung möglich. Der gasförmige Sauerstoff verteilt sich bei der Eindüsung an der als Zerstäuberdüse ausgestalteten Hochdruckdüse 9 sehr gleichmäßig im Arbeitsraum 4. Dadurch wird ein inniges Brennstoff-Sauerstoff-Gemisch im Arbeitsraum 4 erzeugt, das aufgrund der hohen im Arbeitsraum 4 herrschenden Temperaturen selbsttätig oder mittels eines hier nicht gezeigten Fremdzünders zündet.

Nach Überschreiten des oberen Totpunkts des Kolbens 3 verbrennt das Brennstoff-Sauerstoff-Gemisch weiter und erreicht eine Temperatur von über 2000°C und einen Druck von beispielsweise 150-200 bar. Unter der Wirkung dieses hohen Drucks bewegt sich der Kolben 3 nunmehr in Richtung auf den unteren Totpunkt (Fig. 3), wobei in hier nicht gezeigter Weise die Transversalbewegung des Kolbens 3 auf eine Kreisbewegung der Kurbelwelle übertragen wird. Das Brenngas verrichtet mechanische Arbeit am Kolben 3 und kühlt sich dabei ab. Der Druck im Innern des Arbeitsraumes 4 nimmt bis zum Erreichen des unteren Totpunkts auf Werte von wenigen bar ab.

Kurz bevor der Kolben 3 seinen unteren Totpunkt erreicht, öffnet sich das Auslassventil 8. Mit der anschließenden Bewegung des Kolbens 3 in Richtung auf seinen oberen Totpunkt wird das Brenngas aus dem Arbeitsraum 4 in die Abgasleitung 7 gedrückt (Fig. 4). Kurz vor Erreichen des oberen Totpunkts öffnet sich das Eingangsventil 6, kurz nach Überschreiten des oberen Totpunkts schließt sich das Ausgangsventil 8. Mit der Bewegung des Kolbens 3 in Richtung auf seinen unteren Totpunkt wird erneut Brennstoff in den Arbeitsraum 4 eingesaugt.

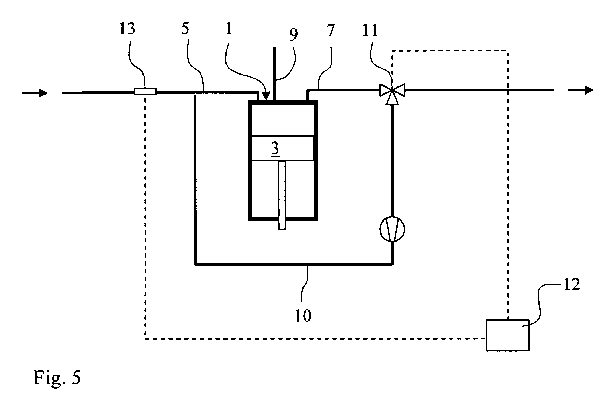

Bei der Ausgestaltung nach Fig. 5 wird ein Teil des bei der Verbrennung des Brennstoffs entstehenden Brenngases zurückgeführt, um anschließend im Arbeitsraum 4 des Hubkolbenmotors 1 als Moderationsgas zu wirken. Dazu ist die Abgasleitung 7 über eine Rückführleitung 10 mit der Brennstoffzuleitung 5 strömungsverbunden. Der Mengenstrom des zu rezyklierenden Brenngases wird an einem Ventil 11 eingestellt, das von einer Rechnereinheit 12 angesteuert wird. Die Rechnereinheit 12 ermittelt den Mengenstrom des zu rezyklierenden Brenngases aufgrund eines vorgegebenen Programms und/oder in Abhängigkeit von gemessenen Parametern, beispielsweise die Zusammensetzung des Brennstoffs, die an einer Messstrecke 13 in der Brennstoffzuleitung ermittelt werden. Anstelle der Rückführung des Brenngases in die Brennstoffzuleitung 5 kann die Rückführleitung auch mit der Sauerstoffzuleitung 9 strömungsverbunden sein, das Brenngas also mit dem Sauerstoff vermischt werden; dadurch entsteht in der Sauerstoffzuleitung eine "künstliche Luft" mit reduziertem Sauerstoffgehalt, die anschließend als Oxidationsmittel dem Arbeitsraum 4 zugeführt wird.

Anstelle des oben beschriebenen Verfahrens, bei dem Sauerstoff in ein verdichtetes Brenngas eingedüst wird, ist es im Rahmen der Erfindung ebenso vorstellbar, gasförmigen oder flüssigen Brennstoff in verdichteten Sauerstoff einzubringen, um auf diese Weise ein zündfähiges Brennstoff-Sauerstoff-Gemisch zu erzeugen. Ebenso können Brennstoff und Sauerstoff zunächst vermischt, im Arbeitsraum verdichtet und durch Fremdzündung, etwa mittels Zündkerze, zur Verbrennung gebracht werden. Auch in diesem Falle ist im Rahmen der Erfindung die Rezyklierung von Brenngas möglich; das rezyklierte Brenngas wird dabei beispielsweise in eine Zuleitung für Brennstoff und Sauerstoff, in eine zur Herstellung des Gemisches bestimmte Mischkammer und/oder in die Arbeitskammer des Hubkolbenmotors eingeführt. Die Erfindung ist im Übrigen nicht auf den Einsatz in Hubkolbenmotoren beschränkt, sondern kann bei allen Motortypen mit diskontinuierlicher Verbrennung eingesetzt werden, beispielsweise auch bei Rotationskolbenmotoren (Wankelmotoren), wobei auch hier eine Rezyklierung von Brenngasen in entsprechender Weise vorgenommen werden kann.

Mit dem erfindungsgemäßen Verfahren lassen sich insbesondere niederkalorische Brennstoffe, bei denen eine Verbrennung mit Luft nicht mehr oder nur schlecht möglich ist, ohne vorhergehende Anreicherung des brennfähigen Bestandteils als Kraftstoffe für Verbrennungsmotoren einsetzen. Darüber hinaus führt das Verfahren insbesondere bei Verwendung von Biogas oder Deponiegas zu einem Abgas, das im Wesentlichen aus Kohlendioxid besteht und ohne aufwändige Aufbereitungsmaßnahmen weiterverwertet oder sequestriert werden kann.

### Bezugszeichenliste

- 1.: Hubkolbenmotor
- 2.: Zylinder
- 3.: Kolben
- 4.: Arbeitsraum
- 5.: Brennstoffzuleitung
- 6.: Einlassventil
- 7.: Abgasleitung
- 8.: Auslassventil
- 9.: Hochdruckdüse
- 10.: Rückführleitung
- 11.: Ventil
- 12.: Rechnereinheit
- 13.: Messstrecke

## Patentansprüche

1. Verfahren zum Betreiben eines Verbrennungsmotors, bei dem in einem Arbeitsraum (4) des Verbrennungsmotors (1) ein aus wenigstens zwei Gaskomponenten bestehendes verdichtetes Arbeitsgas gebildet, das Arbeitsgas anschließend gezündet und verbrannt wird und die bei der Verbrennung des Arbeitsgases frei werdende Energie arbeitsleistend zur Bewegung eines Kolbens (3) eingesetzt wird,
**dadurch gekennzeichnet,**
**dass** als eine erste Gaskomponente des Arbeitsgases gasförmiger Sauerstoff und als eine zweite Gaskomponente ein niederkalorischer Brennstoff zum Einsatz kommt.

2. Verfahren nach Anspruch 1, **dadurch gekennzeichnet, dass** als Brennstoff ein im Wesentlichen aus Kohlenwasserstoffen und Kohlendioxid bestehendes Bio-oder Deponiegas als Brennstoff zum Einsatz kommt.

3. Verfahren nach Anspruch 1 oder 2, **dadurch gekennzeichnet, dass** als Brennstoff ein mit einem Moderationsgas vermischter hochkalorischer Brennstoff zum Einsatz kommt, der vor der Zuführung in den Arbeitsraum (2) des Verbrennungsmotors (1) mit einem Moderationsgas vermischt wird.

4. Verfahren nach Anspruch 3, **dadurch gekennzeichnet, dass** als Moderationsgas rezykliertes Abgas aus dem Verbrennungsprozess zum Einsatz kommt.

5. Verfahren nach Anspruch 4, dass der Mengenstrom des rezyklierten Abgases in Abhängigkeit vom Brennwert des zugeführten Brennstoffs geregelt wird.

6. Verfahren nach einem der vorhergehenden Ansprüche, **dadurch gekennzeichnet, dass** das im Abgas enthaltende Kohlendioxid abgeschieden und einer weiteren Verwendung zugeführt wird.

7. Verbrennungsmotor, mit einem in einer Arbeitskammer (2) beweglich aufgenommenen Kolben (3), wobei die Arbeitskammer (2) mit einer Brennstoffzuleitung (5), eine mit einer Sauerstoffquelle strömungsverbundene Sauerstoffzuleitung und mit einer Abgasleitung (7) strömungsverbunden ist und die Abgasleitung (7) und die Brennstoffzuleitung und/oder die Sauerstoffzuleitung über eine Rückleitung (10) zur teilweisen Rezyklierung des Abgases strömungsverbunden ist.

8. Vorrichtung nach Anspruch 7, **gekennzeichnet durch** die Ausbildung des Verbrennungsmotors (1) als stationärer Motor oder als Schiffsantriebsaggregat.
